# EUROPÄISCHE PATENTSCHRIFT

(11) **EP 2 711 213 B1**
(45) Veröffentlichungstag und Bekanntmachung des Hinweises auf die Patenterteilung: **18.11.2015**
(21) Anmeldenummer: 13004560.2
(22) Anmeldetag: 18.09.2013
(51) Int. Cl.: B60G 7/00, F16C 7/02, F16C 7/04

(54) **Lenker für eine Radaufhängung eines Kraftfahrzeugs**
Arm for a wheel suspension in a motor vehicle
Bras pour une suspension de roue dans un véhicule automobile

(30) Priorität: 20.09.2012 DE 102012018554
(43) Veröffentlichungstag der Anmeldung: 26.03.2014
(73) Patentinhaber: AUDI AG, 85045 Ingolstadt (DE)
(72) Erfinder: Schindler, Sebastian, 85049 Ingolstadt (DE); Fessel, Guido, 85049 Ingolstadt (DE)

(56) Entgegenhaltungen:
- EP-A1- 0 399 253
- EP-A2- 0 355 405
- DE-A1- 10 032 711
- DE-A1- 19 931 079
- DE-A1-102007 033 763
- DE-A1-102009 046 894
- DE-C- 882 512
- GB-A- 2 327 649

## Beschreibung

Die Erfindung betrifft einen Lenker für eine Radaufhängung eines Kraftfahrzeugs gemäß der im Oberbegriff des Patentanspruches 1 angegebenen Art. Ein Beispiel eines solchen Lenkers ist aus der GB 2 327 649 A bekannt.

Derartige Lenker für eine Radaufhängung eines Kraftfahrzeugs werden beispielsweise als Längs- oder Querlenker eingesetzt und weisen eine Lenkerbasis sowie mindestens zwei endseitig angeordnete Lagerstellen auf. Um eine ausreichende Tragfähigkeit zu gewährleisten, sind derartige Lenker in der Regel aus Metall gefertigt. Aufgrund der Ausbildung aus Metall und der damit verbundenen plastischen Verformungseigenschaften des Lenkers, tritt im Schadensfall, d.h. bei Überschreiten einer vorgegebenen Missbrauchslast, eine Verbiegung bzw. Verformung des Lenkers auf, so dass eine Weiterfahrt des Kraftfahrzeugs, z.B. zum Werkstattbesuch, in der Regel noch möglich ist. Ein derartiger Lenker ist beispielsweise in der DE 199 31 079 A1 offenbart.

Es ist weiterhin bekannt, zur Gewichtsoptimierung die Lenkerbasis anstelle aus Metall aus Faserverbundkunststoff zu fertigen. Als nachteilig erweist sich hierbei, dass Faserverbundkunststoffe bei Überschreiten einer vorgegebenen Missbrauchslast in der Regel zu Sprödbruch neigen. Im Falle eines aus Faserverbundkunststoff hergestellten Lenkers bedeutet dies, dass dieser im Schadensfall bricht und somit ein vollständiges Bauteilversägen auftritt. Eine Weiterfahrt ist folglich nicht mehr möglich.

Aus der Offenbarung der DE 10 2007 033 763 A1 ist ein Hybridlenker aus dünnem aber hochfestem Blech bekannt, wobei das Blech mit glasfaserverstärktem Kunststoff umspritzt ist. Diese Konstruktion zeichnet sich insbesondere dadurch aus, dass im Schadensfall aufgrund der Blechkonstruktion eine eingeschränkte Funktionsfähigkeit des Lenkers gewährleistet ist.

Der Erfindung liegt die Aufgabe zugrunde, einen Lenker für eine Radaufhängung eines Kraftfahrzeugs gemäß der im Oberbegriff des Patentanspruches 1 angegebenen Art derart weiterzubilden, dass im Missbrauchsfall eine eingeschränkte Funktionalität des Lenkers gewährleistet ist und ein Schadensfall des Lenkers für den Fahrer des Kraftfahrzeugs detektierbar ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst der Lenker für eine Radaufhängung eines Kraftfahrzeugs mindestens eine radseitige Lagerstelle, mindestens eine aufbauseitige Lagerstelle sowie eine sich zwischen den beiden Lagerstellen erstreckende Lenkerbasis. Die Lagerstellen und die Lenkerbasis sind hierbei in Hybridbauweise ausgebildet, d.h. sie weisen einen Kern aus einem hochfesten, duktilen Material auf, der von einer Ummantelung eingefasst ist.

Erfindungsgemäß ist die Ummantelung derart ausgebildet und dimensioniert, dass unterhalb einer vorgegebenen ersten Missbrauchslast auftretende Betriebslasten ausschließlich von der Ummantelung aufgenommen werden und bei Überschreiten der ersten Missbrauchslast ein gezieltes Versagen der Ummantelung auftritt. Weiterhin ist erfindungsgemäß vorgesehen, dass der Kern im Bereich der Lenkerbasis geteilt, d.h. in Lenkerlängsrichtung betrachtet einen ersten und zweiten Abschnitt aufweisend, ausgebildet ist, wobei die beiden Abschnitte des Kerns über eine in Lenkerlängsrichtung betrachtet, einen Freilaufweg aufweisende und in Lenkerlängsrichtung in Eingriff bringbare Kupplung miteinander verbunden sind.

Durch die erfindungsgemäße Ausgestaltung des Lenkers für eine Radaufhängung eines Kraftfahrzeugs ist nunmehr in vorteilhafter Weise sichergestellt, dass der Lenker ein im Vergleich zu einem aus Metall gefertigtem Lenker geringeres Bauteilgewicht aufweist. Die erfindungsgemäße Anordnung und Dimensionierung von Ummantelung und Kern hat den Effekt, dass im Schadensfall, d.h. bei Überschreiten der ersten Missbrauchslast z.B. durch ein zu forsches Überfahren eines Bordsteines, und dem damit verbundenen definierten Versagen der Ummantelung, eine in Lenkerlängsrichtung gerichtete Relativbewegung der beiden Abschnitte des Kerns zueinander auftritt. Aufgrund der Kupplung ist die in Lenkerlängsrichtung gerichtete Relativbewegung auf den Freilaufweg der Kupplung begrenzt, d.h. bis die Kupplung in Eingriff steht. Der aufgezehrte Freilaufweg bedingt eine verstellte Spur- oder Sturzeinstellung, die für den Fahrer aufgrund der spürbar geänderten Fahreigenschaften leicht erkennbar/detektierbar ist. Nachdem im Schadensfall die beiden Abschnitte des Kerns mittels der Kupplung miteinander in Eingriff stehen, ist eine eingeschränkte Funktionalität des Lenkers und damit eine Weiterfahrt ermöglicht, so dass der Fahrer in der Lage ist, selbstständig eine Werkstatt anzufahren.

Gemäß einer besonders vorteilhaften Ausführungsform der Erfindung weist der Kern im Bereich der Lenkerbasis eine geometrische Irregularität, insbesondere in Form eines S-Schlages, auf. Die Irregularität ist hierbei derart ausgebildet und dimensioniert, dass bei Überschreiten einer zweiten Missbrauchslast der Kern im Bereich der Irregularität versagt. Diese Ausbildung erweist sich als besonders vorteilhaft, da im Falle einer über den oben geschilderten ersten Missbrauchsfall hinausgehenden Missbrauchsbelastung des Lenkers, z.B. hervorgerufen durch einen leichten Unfall, ein definiertes Knicken des Lenkers im Bereich der Irregularität auftritt. Eine Separation des Lenkers und damit eine weitergehende Beschädigung benachbarter Bauteile der Radaufhängung wird somit in vorteilhafter Weise vermieden.

Vorzugsweise ist die Ummantelung aus einem spröden Material, insbesondere aus einem spröden Kunststoff, ausgebildet. Aufgrund der guten mechanischen und thermischen Eigenschaften und der Eignung zur Großserienfertigung im Spritzgussprozess, handelt es sich bei dem Kunststoff vorzugsweise um einen kurzfaserverstärkten Kunststoff, beispielsweise Kurzfaser-GFK oder Kurzfaser-CFK.

Der Kern des Lenkers ist vorzugsweise aus Stahl ausgebildet. Die Ausbildung des Kerns aus Stahl hat den Vorteil, dass Stahl die notwendigen Materialeigenschaften, nämlich hochfest und duktil, aufweist und zudem ein verhältnismäßig kostengünstiger Werkstoff darstellt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine Schnittdarstellung eines erfindungsgemäßen Lenkers, und
- Fig. 2: eine schematische Darstellung einer weiteren Ausführungsform der Kupplung des Lenkers aus Fig. 1

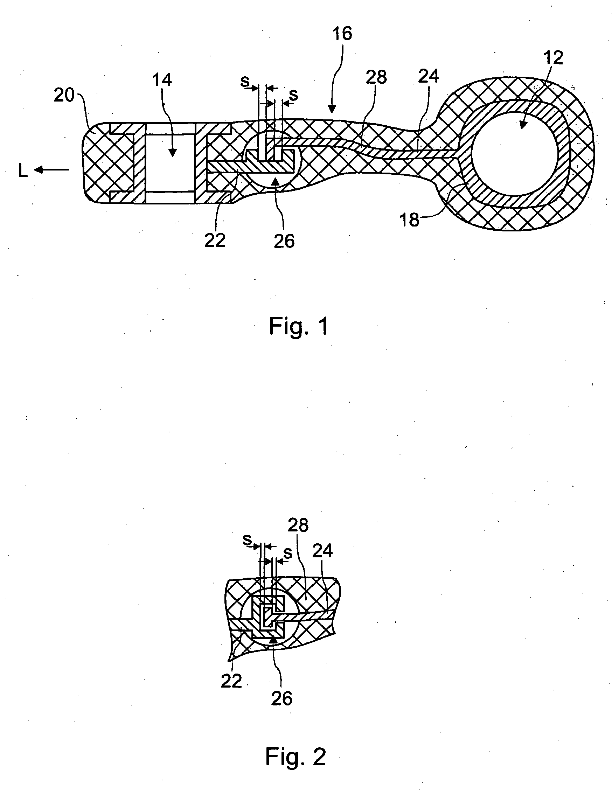

Fig. 1 zeigt einen insgesamt mit der Bezugsziffer 10 bezeichneten Lenker für eine Radaufhängung eines Kraftfahrzeugs.

Der Lenker 10 umfasst eine radseitige Lagerstelle 12 sowie eine aufbauseitige Lagerstelle 14 und einen zwischen den beiden Lagerstellten 12, 14 sich erstreckende Lenkerbasis 16.

Wie Fig. 1 zu entnehmen ist, sind die Lagerstellen 12, 14 sowie die Lenkerbasis 16 aus Metall - nachfolgend als Kern 18 bezeichnet - ausgebildet und weisen eine spröde Ummantelung 20 auf.

Bei dem Kern 18 handelt es sich vorliegend um einen duktilen, hochfesten Stahl und bei der Ummantelung 20 um einen kurzfaserverstärkten Kunststoff.

Die Ummantelung 20 ist derart dimensioniert und ausgebildet, dass sämtliche, unter einer vorher definierten ersten Missbrauchslast auftretende Betriebslasten des Lenkers 10 ausschließlich von der Ummantelung 20 aufgenommen werden.

Weiterhin ist, wie Fig. 1 deutlich zu entnehmen ist, der Kern 18 des Lenkers 10 im Bereich der Lenkerbasis 16 geteilt ausgebildet. D.h. der Kern 18 umfasst einen ersten Abschnitt 22 und einen zweiten Abschnitt 24.

Über eine insgesamt mit der Bezugsziffer 26 bezeichnete, lediglich schematisch dargestellte Kupplung stehen die beiden Abschnitte 22, 24 des Kerns 18 miteinander in Eingriff. Hierbei ist die Kupplung 26 derart ausgelegt, dass in Lenkerlängsrichtung L betrachtet ein Freilaufweg s vorhanden ist und bei Aufzehrung des Freilaufwegs s die Kupplung 26 die beiden Abschnitte 22, 24 miteinander kuppelt.

Zudem weist, wie Fig. 1 weiter zu entnehmen ist, der Lenker 10 eine insgesamt mit der Bezugsziffer 28 bezeichnete Irregularität auf. Diese ist derart ausgebildet, dass bei Überschreiten einer vorgegebenen zweiten Missbrauchslast der Lenker 10 in diesem Bereich knickt.

Die Funktion des Lenkers 10 ist folgende:
Im normalen Betriebszustand werden die auftretenden Betriebslasten von der der Ummantelung 20 aufgenommen.

Kommt es zu einem Missbrauchsfall, d.h. eine Belastung des Lenkers 10 über die vorher definierte erste Missbrauchslast, beispielsweise durch ein unachtsames Auffahren auf einen Bordstein oder ähnliches, tritt ein definiertes Versagen der Ummantelung 20 im Bereich der Kupplung 26 auf. Dies wiederum hat zur Folge, dass aufgrund der Relativbewegung der beiden Abschnitte 22, 24 des Kerns 18 zueinander, die beiden Abschnitte 22, 24 über die Kupplung 26 miteinander gekuppelt werden, wodurch die Funktionalität des Lenkers 10 weiterhin gewährleistet bleibt. Da die Relativbewegung der beiden Abschnitte 22, 24 zueinander, eine spürbare Spur- bzw. Sturzverstellung hervorrufen, ist für den Fahrer die Schädigung einfach erkennbar.

Tritt eine weiterführende Belastung des Lenkers über eine vorher definierte zweite Missbrauchslast auf, z.B. aufgrund eines Crashs, bedingt die Irregularität 28 ein definiertes Ausknicken des Lenkers 10 in diesem Bereich. Aufgrund des definierten Ausknickens des Lenkers 10 wird eine vollständige Separation des Lenkers 10 und damit eine Beschädigung weiter Bauteile der Radaufhängung vermieden.

Fig. 2 zeigt eine weitere schematische Darstellung der Kupplung 26 des Lenkers 10. Die Funktionsweise der Kupplung ist die gleiche.

### Bezugszeichenliste

- 10: Lenker
- 12: radseitige Lagerstelle
- 14: aufbauseitige Lagerstelle
- 16: Lenkerbasis
- 18: Kern
- 20: Ummantelung
- 22: erster Abschnitt
- 24: zweiter Abschnitt
- 26: Kupplung
- 28: Irregularität

- L: Lenkerlängsrichtung
- S: Freilaufweg

## Patentansprüche

1. Lenker (10) für eine Radaufhängung eines Kraftfahrzeugs,
- umfassend mindestens eine radseitige Lagerstelle (12),
- mindestens eine aufbauseitige Lagerstelle (14), sowie
- eine sich zwischen den beiden Lagerstellen (12, 14) erstreckende Lenkerbasis (16),
wobei die Lagerstellen (12, 14) und die Lenkerbasis (16) einen von einer Ummantelung (20) eingefassten Kern (18) aus einem duktilen Material aufweisend ausgebildet sind, wobei die Ummantelung (20) derart ausgebildet und dimensioniert ist, dass unterhalb einer vorgegebenen ersten Missbrauchslast auftretende Betriebslasten ausschließlich von der Ummantelung (20) aufgenommen werden, und bei Überschreiten der vorgegebenen ersten Missbrauchslast ein gezieltes Versagen der Ummantelung (20) auftritt, **dadurch gekennzeichnet, dass** der Kern (18) in einen ersten und zweiten Abschnitt (22, 24) geteilt ausgebildet ist, und die beiden Abschnitte (22, 24) des Kerns (18) über eine in Lenkerlängsrichtung (L) betrachtet einen Freilaufweg (s) aufweisende und in Lenkerlängsrichtung (L) in Eingriff bringbare Kupplung (26) miteinander verbunden sind.

2. Lenker (10) nach Anspruch 1, **dadurch gekennzeichnet, dass** der Kern (18) im Bereich der Lenkerbasis (16) eine geometrische Irregularität (28) aufweist, wobei die Irregularität (28) derart ausgebildet und dimensioniert ist, dass bei Überschreiten einer vorgegebenen zweiten Missbrauchslast der Kern (18) im Bereich der Irregularität (28) versagt.

3. Lenker (10) nach Anspruch 2, **dadurch gekennzeichnet, dass** die geometrische Irregularität (28) des Kerns (18) in Form eines S-Schlages ausgebildet ist.

4. Lenker (10) nach einem der vorgenannten Ansprüche, **dadurch gekennzeichnet, dass** die Ummantelung (20) aus einem spröden Material ausgebildet ist.

5. Lenker (10) nach Anspruch 4, **dadurch gekennzeichnet, dass** die Ummantelung (20) aus einem kurzfaserverstärkten Kunststoff ausgebildet ist.

6. Lenker (10) einem der vorangehenden Ansprüche, **dadurch gekennzeichnet, dass** der Kern (18) aus Stahl ausgebildet ist.

## Claims

1. Suspension arm (10) for a wheel suspension of a motor vehicle, comprising
- at least one wheel-side bearing point (12),
- at least one body-side bearing point (14), and
- a suspension arm base (16) which extends between the two bearing points (12, 14),
the bearing points (12, 14) and the suspension arm base (16) being formed to have a core (18) which is surrounded by a casing (20) and made of a ductile material, the casing (20) being formed and dimensioned such that operational loads which occur below a predefined first misuse load are carried exclusively by the casing (20) and, when the predefined first misuse load is exceeded, targeted failure of the casing (20) occurs, **characterised in that** the core (18) is divided into a first and second portion (22, 24) and the two portions (22, 24) of the core (18) are interconnected by means of a coupling (26) which can be brought into engagement in the longitudinal direction (L) of the suspension arm and has a freewheel path (s) when viewed in the longitudinal direction (L) of the suspension arm.

2. Suspension arm (10) according to claim 1, **characterised in that** the core (18) has a geometric irregularity (28) in the region of the suspension arm base (16), the irregularity (28) being formed and dimensioned such that, when a predefined second misuse load is exceeded, the core (18) fails in the region of the irregularity (28).

3. Suspension arm (10) according to claim 2, **characterised in that** the geometric irregularity (28) of the core (18) is S-shaped.

4. Suspension arm (10) according to any of the preceding claims, **characterised in that** the casing (20) is made of a brittle material.

5. Suspension arm (10) according to claim 4, **characterised in that** the casing (20) is made of a short-fibre-reinforced plastics material.

6. Suspension arm (10) according to any of the preceding claims, **characterised in that** the core (18) is made of steel.

## Revendications

1. Bras (10) pour une suspension de roue d'un véhicule automobile, comprenant
- au moins un palier (12) côté roue,
- au moins un palier (14) côté structure,
- ainsi qu'une base de bras (16) s'étendant entre les deux paliers (12, 14),
les paliers (12, 14) et la base de bras (16) étant conçus de manière à comporter un noyau (18) qui est entouré par une enveloppe (20) et qui est en un matériau ductile,
l'enveloppe (20) étant conçue et dimensionnée de telle sorte que des charges en fonctionnement apparaissant en dessous d'une première charge abusive prescrite sont supportées exclusivement par l'enveloppe (20) et qu'une défaillance ciblée de l'enveloppe (20) apparaît lorsque la première charge abusive prescrite est dépassée,
**caractérisé en ce que** le noyau (18) est conçu divisé en un premier et un deuxième tronçon (22, 24) et **en ce que** les deux tronçons (22, 24) du noyau (18) sont reliés l'un à l'autre par l'intermédiaire d'un dispositif d'accouplement (26) qui comporte une course en roue libre (s) vue dans la direction longitudinale (L) du bras et qui peut être mis en prise dans la direction longitudinale (L) du bras.

2. Bras (10) selon la revendication 1, **caractérisé en ce que** le noyau (18) présente une irrégularité géométrique (28) dans la zone de la base de bras (16), l'irrégularité (28) étant conçue et dimensionnée de telle sorte que, lors d'un dépassement d'une deuxième charge abusive prescrite, le noyau (18) est défaillant dans la zone de l'irrégularité (28).

3. Bras (10) selon la revendication 2, **caractérisé en ce que** l'irrégularité géométrique (28) du noyau (18) est conçue en forme d'accordéon.

4. Bras (10) selon l'une des revendications précédentes, **caractérisé en ce que** l'enveloppe (20) est conçue en un matériau cassant.

5. Bras (10) selon la revendication 4, **caractérisé en ce que** l'enveloppe (20) est conçue en une matière plastique renforcée par des fibres courtes.

6. Bras (10) selon l'une des revendications précédentes, **caractérisé en ce que** le noyau (18) est conçu en acier.
